# EUROPÄISCHE PATENTANMELDUNG

(11) **EP 4 173 931 A1**
(43) Veröffentlichungstag der Anmeldung: **03.05.2023**
(21) Anmeldenummer: 22202712.0
(22) Anmeldetag: 20.10.2022
(51) Int. Cl.: B62D 25/20, B62D 29/04, B62D 33/04

(54) **FAHRZEUG, INSBESONDERE KÜHLFAHRZEUG**

(30) Priorität: 29.10.2021 DE 102021128312
(71) Anmelder: Kögel Trailer GmbH, 89349 Burtenbach (DE)
(72) Erfinder: BIRLE, Günter, 86877 Walkertshofen (DE)
(74) Vertreter: Meissner Bolte Partnerschaft mbB

(57) **Zusammenfassung**

Die Erfindung betrifft ein Fahrzeug, insbesondere ein Kühlfahrzeug, mit einem Chassis (30) und einem Fahrzeugaufbau, der einen Boden (10) mit wenigstens einem zwischen einer unteren Deckschicht (11) und einer oberen Deckschicht angeordneten Querträger (13) aufweist, wobei der Querträger (13) durch ein I-Profil aus einem Kunststoffmaterial gebildet ist, das einen Untergurt (13a), einen Obergurt (13b) und einen den Untergurt (13a) und den Obergurt (13b) verbindenden Steg (13c) umfasst, wobei der Querträger (13) mittels eines auf einer Oberseite des Untergurts (13a) aufliegenden Spannelements (20) mit dem Chassis (30) verbunden ist.

## Beschreibung

Die Erfindung betrifft ein Fahrzeug, insbesondere ein Kühlfahrzeug, gemäß dem Oberbegriff des Patentanspruchs 1. Ein derartiges Fahrzeug ist beispielsweise aus EP 3 090 926 B1 bekannt.

EP 3 090 926 B1 beschreibt ein Kühlfahrzeug mit einem Fahrzeugaufbau, der einen Boden mit einer unteren Deckschicht und einer oberen Deckschicht aufweist. Zwischen den Deckschichten sind Querträger aus Holz angeordnet. Die Zwischenräume bzw. Kammern zwischen den Querträgern sind mit Schaum ausgefüllt. Die Querträger weisen in ihrer Gesamtlänge jeweils gegenüberliegende U-förmige Ausnehmungen auf. Zur Befestigung der Querträger auf dem Chassis sind Konsolen vorgesehen, die sowohl mit der unteren Deckschicht, als auch mit dem Querträger verschraubt sind.

Die Gesamtmasse eines Kühlfahrzeugs ist gesetzlich begrenzt, so dass generell das Bestreben nach Leichtbau besteht, da auf diese Weise die Nutzlast erhöht werden kann. Das bekannte Kühlfahrzeug ist wegen der verwendeten Materialien jedoch vergleichsweise schwer. Zudem benötigen Querträger aus Holz eine Mindeststärke, um eine ausreichende Stabilität bereitzustellen. Dies wiederum reduziert den Anteil des wärmeisolierenden Schaums, der zwischen die Querträger eingebracht werden kann, was zu Lasten der Isolationseigenschaften des Fahrzeugbodens geht.

Vor diesem Hintergrund besteht die Aufgabe der Erfindung darin, ein Fahrzeug, insbesondere ein Kühlfahrzeug, anzugeben, das ein geringes Gewicht aufweist und dessen Fahrzeugaufbau eine verbesserte Isolationswirkung zeigt.

Erfindungsgemäß wird diese Aufgabe durch den Gegenstand des Patentanspruchs 1 gelöst.

Konkret beruht die Erfindung auf dem Gedanken, ein Fahrzeug, insbesondere ein Kühlfahrzeug, mit einem Chassis und einem Fahrzeugaufbau anzugeben, der einen Boden mit wenigstens einem zwischen einer unteren Deckschicht und einer oberen Deckschicht angeordneten Querträger aufweist. Erfindungsgemäß ist der Querträger durch ein I-Profil aus einem Kunststoffmaterial gebildet, das einen Untergurt, einen Obergurt und einen den Untergurt und den Obergurt verbindenden Steg umfasst. Der Querträger ist mittels eines auf einer Oberseite des Untergurts aufliegenden Spannelements mit dem Chassis verbunden.

Die Verwendung eines Kunststoffmaterials für den Querträger in Kombination mit der Gestaltung als I-Profil bewirkt zweierlei. Einerseits wird durch das Kunststoffmaterial das Eigengewicht des Querträgers und damit die Eigenmasse des Fahrzeugs insgesamt reduziert. Anderseits ermöglicht es das I-Profil, bei ausreichender Stabilität große Freiräume zu schaffen, in welche ein isolierendes Schaummaterial aufgenommen werden kann. Auf diese Weise ist der Boden des Fahrzeugaufbaus des erfindungsgemäßen Fahrzeugs besonders gut thermisch isolierend.

Die Stabilität des Fahrzeugs wird dadurch verbessert, dass der Querträger mittels eines Spannelements mit dem Chassis verbunden ist. Einerseits ist der Querträger auf diese Weise stabil auf dem Chassis festgelegt. Andererseits bewirkt das auf der Oberseite des Untergurts aufliegende Spannelement, dass auf zusätzliche Verschraubungen oder Verbindungen zwischen Spannelement und dem Querträger verzichtet werden kann. Eine Schwächung des Querträgers, beispielsweise durch Schrauben, die den Querträger durchdringen, wird auf diese Weise vermieden. Zudem besteht der Kontakt zwischen Spannelement und dem Querträger auf einer relativ großen Fläche, so dass sich ein Spanndruck gut auf dem Untergurt verteilt und so punktuelle Belastungen am Querträger vermieden werden. Auch dies erhöht die Stabilität Fahrzeugs.

Das Chassis kann Chassisträger aufweisen, die als Chassis-Längsträger oder Chassis-Querträger ausgebildet sein können. Der Querträger des Bodens ist vorzugsweise mit dem Chassisträger mittels des Spannelements verbunden. Insbesondere kann auch vorgesehen sein, dass mehrere Querträger des Bodens über ein oder mehrere Spannelemente mit dem Chassis verbunden sind, wobei einzelne Spannelemente eine Verbindung mit Chassis-Längsträgern und andere Spannelemente eine Verbindung mit Chassis-Querträgern herstellen.

Die Verbindung zwischen dem Querträger und dem Chassis im Wesentlichen dadurch erfolgen, dass der Querträger mittels des Spannelements gegen das Chassis verspannt wird.

Insofern ist es bevorzugt vorgesehen, wenn das Spannelement mit dem Querträger ausschließlich formschlüssig verbunden wird. Insbesondere kann vorgesehen sein, dass das Spannelement den Querträger lediglich flächenmäßig berührt, jedoch keinerlei kraftschlüssige Verbindung, beispielsweise durch Schrauben oder dergleichen, mit dem Querträger besteht. Insbesondere sind also keinerlei Verbindungsmittel erforderlich, die in den Querträger eindringen und mit dem Spannelement verbunden sind.

Das Spannelement selbst kann mit dem Chassis durch eine Schraube verbunden sein. Das Spannelement kann alternativ oder zusätzlich mit einem Gegenstück durch eine Schraube verbunden sein, wobei das Gegenstück an einer zur Oberseite des Unterguts im Wesentlichen parallelen Unterseite des Chassisträgers anliegt. Auf diese Weise wird eine feste Verbindung zwischen dem Chassis und dem Spannelement erzeugt, die durch das Aufliegen des Spannelements auf der Oberseite des Untergurts des Querträgers zusätzlich bewirkt, dass auch der Querträger fest dem Chassis verbunden ist. Die Verwendung von Schrauben ist einfach in den Montageprozess zu integrieren und bewirkt eine hohe Stabilität der Verbindung zwischen Querträger und Chassis.

Das Spannelement kann eine zumindest zur unteren Deckschicht offene Bohrung aufweisen. Besonders bevorzugt ist es, wenn die Bohrung ein Innengewinde aufweist. Die Schraube kann in die Bohrung, insbesondere das Innengewinde eingreifen. Alternativ ist es auch möglich, dass anstelle eines Innengewindes in der Bohrung eine zusätzliche Mutter vorgesehen ist, die im Bereich der Bohrung mit dem Spannelement fest verbunden, beispielsweise verschweißt ist. Eine weitere Möglichkeit für eine sichere Verbindung zwischen dem Chassis und dem Spannelement besteht darin, dass die Schraube als selbstbohrende und/oder gewindefurchende Schraube ausgebildet ist. In diesem Fall kann das Spannelement ohne eine Bohrung oder nur mit einer Bohrung ohne Innengewinde ausgeführt werden. Das Gewinde entsteht vielmehr durch das Eindrehen der Schraube, die beim Eindrehen die Bohrung und/oder ein Innengewinde erzeugt.

Bei einer bevorzugten Ausführungsform der Erfindung ist vorgesehen, dass sich das Spannelement durch eine Profilöffnung im Steg des Querträgers erstreckt. Der Querträger kann also eine Durchbrechung aufweisen, die vorzugsweise im Steg ausgebildet ist. Die Profilöffnung kann insbesondere an den Untergurt angrenzen und im Wesentlichen die Form eines Querschnitts des Spannelements zumindest teilweise nachbilden. Auf diese Weise kann das Spannelement so angeordnet werden, dass es beide durch den Steg getrennte Schenkel des Untergurts überdeckt und so eine besonders große Auflagefläche auf dem Untergurt hat. Dadurch wird der vom Spannelement aufgebrachte Druck, der durch das Verbinden des Spannelements mit dem Chassis entsteht, gut auf den Untergurt verteilt.

Das Spannelement und/oder das Gegenstück kann/können insbesondere eine Spannpratze bilden. Als Spannpratze werden üblicherweise Bauteile bezeichnet, die eine plattenartige Form aufweisen und zur klemmenden Befestigung anderer Bauteile benutzt werden. Insofern kann das Spannelement also plattenartig ausgestaltet sein und gegen die untere Deckschicht und/oder die Oberseite des Untergurts des Querträgers verspannt werden. Im Wesentlichen bietet das Spannelement also eine Spannbefestigung des Querträgers auf der unteren Deckschicht. Wenn das Spannelement mit dem Gegenstück gemeinsam eine Spannpratze bildet, sind das Spannelement und das Gegenstück vorzugsweise durch eine Schraube oder Gewindestange miteinander verbunden. Die Spannpratze wirkt in diesem Fall wie ein Schraubstock oder eine Schraubklemme, der bzw. die den Querträger mit dem Chassis, insbesondere einem Chassisträger, verspannt.

Das Spannelement kann in bevorzugten Ausführungsformen eine asymmetrische Form aufweisen. Durch die asymmetrische Form kann insbesondere eine verbesserte Verteilung des Spanndrucks bzw. der Spannkraft auf den Untergurt des Querträgers erreicht werden. Gleichzeitig kann die asymmetrische Form eine Verdrehsicherung bieten.

Eine Verdrehsicherung wird insbesondere dann erreicht, wenn das Spannelement zwei diametral gegenüber angeordnete Fortsätze umfasst, die auf unterschiedlichen Seiten des Stegs des Querträgers angeordnet sind und gegenüber dem Steg jeweils einen Anschlag bilden. Bei dieser bevorzugten Ausführungsform ist das Spannelement folglich asymmetrisch ausgebildet, wobei sich das Spannelement vorzugsweise durch eine Profilöffnung im Steg des Querträgers erstreckt. Die beiden diametral gegenüber angeordneten Fortsätze können vorzugsweise in Längsrichtung des Querträgers über die Profilöffnung vorstehen. Auf diese Weise schlagen die Fortsätze jeweils gegenläufig gegen den Steg des Querträgers an, wodurch sich eine Verdrehsicherung des Spannelements ergibt. Wenn beispielsweise das Spannelement mittig eine Bohrung aufweist, die eine Schraube zur Verbindung des Spannelements mit dem Chassis aufnimmt, so wird durch die Verdrehsicherung erreicht, dass die Schraube gut und fest in das Spannelement eingeschraubt werden kann, ohne dass sich das Spannelement bei der Drehbewegung mitdreht. Zusätzlich bewirken die Fortsätze, dass der Spanndruck über eine größere Fläche auf den Untergurt ausgeübt wird, wodurch eine durch die Profilöffnung bewirkte Schwächung des Querträgers kompensiert wird. Das Spannelement kann dazu ergänzend mit dem Untergurt verklebt sein. Insgesamt wird mit den Fortsätzen eine sichere Befestigung des Spannelements erreicht.

Bei einer weiteren Ausführungsform der Erfindung kann das Spannelement zwischen zwei Querträgern angeordnet sein und beide Querträger gemeinsam mit dem Chassis verbinden. Mit dieser Variante wird die Anzahl der erforderlichen Spannelemente zur ausreichenden Befestigung der Querträger des Bodens reduziert, was sich positiv auf das Leergewicht des Fahrzeugaufbaus auswirkt. Diese Variante ist jedoch nur dann zweckmäßig einsetzbar, wenn der Abstand zwischen den Querträgern ein bestimmtes Höchstmaß nicht überschreitet.

Eine weitere Ausführungsform der Erfindung sieht vor, dass das Spannelement den Untergurt des Querträgers formschlüssig umgreift. Das Spannelement kann insoweit beispielsweise eine Schiene bilden, in die der Untergurt des Querträgers eingeführt ist. Eine solche Variante bietet eine besonders hohe Verbindungsfestigkeit zwischen dem Spannelement und dem Querträger.

Um punktuelle Belastungen auf den Querträger zu vermeiden, kann es, insbesondere bei einem Spannelement, das den Untergurt des Querträgers formschlüssig umgreift, sinnvoll sein, wenn das Spannelement unterhalb des Querträgers so in eine Ausnehmung der unteren Deckschicht versenkt ist, so dass der Querträger auf einer Oberfläche der unteren Deckschicht bündig aufliegt. Auf diese Weise kann die vom Querträger aufgenommene Last über eine große Fläche in die Deckschicht eingeleitet werden, was die strukturelle Belastung auf die Deckschicht reduziert.

Die Erfindung wird im Folgenden anhand von Ausführungsbeispielen unter Bezugnahme auf die beigefügten schematischen Zeichnungen näher erläutert. Darin zeigen
- Fig. 1: eine perspektivische Darstellung eines Boden eines erfindungsgemäßen Fahrzeugs nach einem bevorzugten Ausführungsbeispiel, wobei ein Spannelement zwei benachbarte Querträger gemeinsam mit dem Chassis verbindet;
- Fig. 2: eine perspektivische Darstellung einer Befestigung eines Querträgers eines Bodens eines erfindungsgemäßen Fahrzeugs nach einem weiteren bevorzugten Ausführungsbeispiel;
- Fig. 3: eine perspektivische Darstellung eines Bodens eines erfindungsgemäßen Fahrzeugs nach einem weiteren bevorzugten Ausführungsbeispiel;
- Fig. 4: eine weitere perspektivische Darstellung der Befestigung eines Querträgers bei dem Boden gemäß Fig. 3;
- Fig. 5: eine perspektivische Darstellung eines Bodens eines erfindungsgemäßen Fahrzeugs nach einem weiteren bevorzugten Ausführungsbeispiel;
- Fig. 6: eine Querschnittsansicht des Bodens gemäß Fig. 5;
- Fig. 7: eine perspektivische Darstellung eines Spannelements, das bei dem Boden gemäß Fig. 5 zur Befestigung des Querträgers zum Einsatz kommt; und
- Fig. 8: eine perspektivische Darstellung eines Abschnitts eines erfindungsgemäßen Fahrzeugs mit einem Chassis und einem einer unteren Deckschicht eines Bodens des Fahrzeugaufbaus.

Der Grundgedanke der Erfindung besteht darin, einen Querträger 13 eines Bodens 10 eines Fahrzeugaufbaus mittels eines Spannelements 20 auf einem Chassis 30 zu fixieren. Dabei kann eine untere Deckschicht 11 des Bodens 10 zwischen dem Querträger 13 und dem Chassis 30 angeordnet bzw. geklemmt sein. Der Querträger 13 ist durch ein Kunststoffmaterial gebildet und weist ein I-Profil auf. Das Kunststoffmaterial kann insbesondere ein glasfaserverstärktes oder kohlefaserverstärktes Kunststoffmaterial sein. Dieser Grundgedanke verwirklicht sich in unterschiedlichen Ausführungsbeispielen. Insbesondere können unterschiedliche Spannelemente eingesetzt werden, um den vorgenannten Grundgedanken umzusetzen.

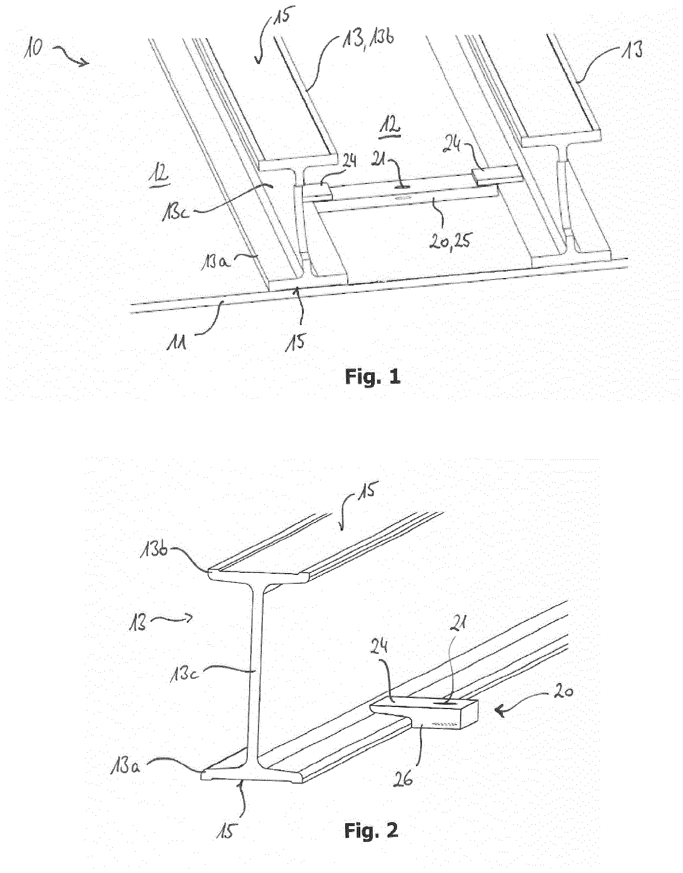

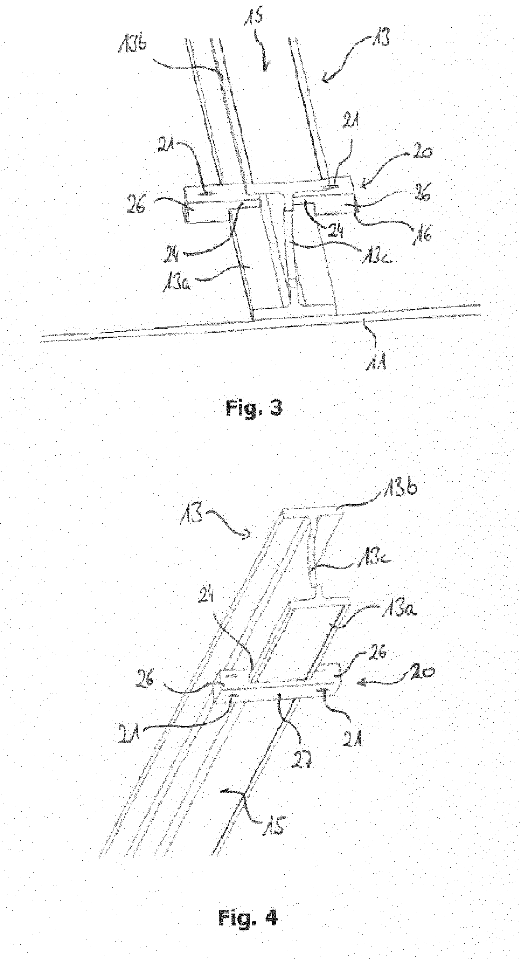

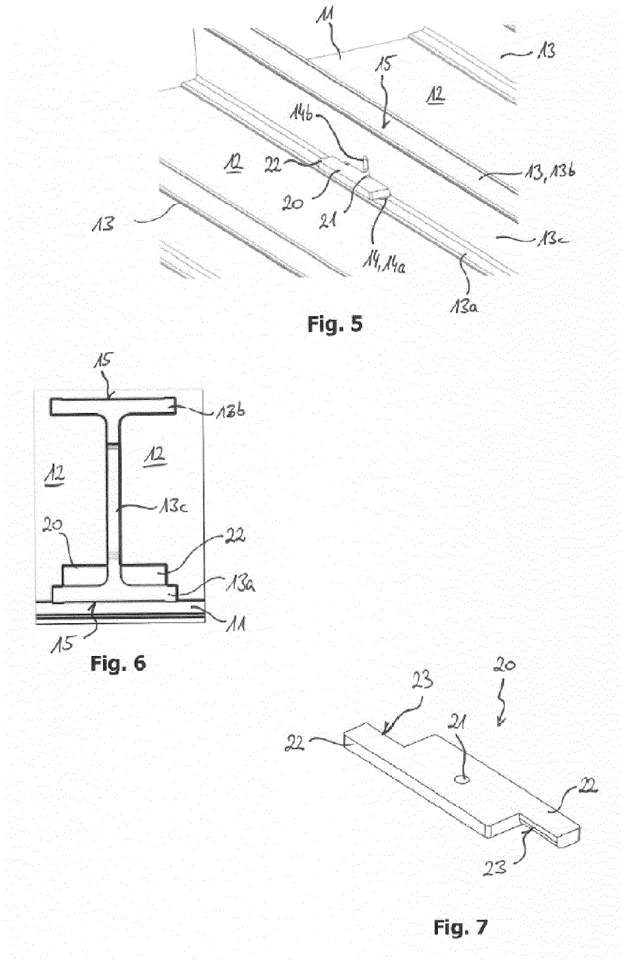

Fig. 1 zeigt dazu ein erstes Ausführungsbeispiel mit einer ersten Variante eines Spannelements 20. Fig. 2 zeigt eine zweite Variante eines Spannelements 20. In Fig. 3 und 4 ist eine dritte Variante eines entsprechenden Spannelements 20 gezeigt. Die Fig. 5 bis 7 erläutern ein Ausführungsbeispiel mit einer vierten Variante eines entsprechenden Spannelements.

Der Boden 10 des Fahrzeugaufbaus umfasst in allen Ausführungsbeispielen eine untere Deckschicht 11 und eine obere Deckschicht, die in den beigefügten Zeichnungen aus Gründen der Übersichtlichkeit nicht dargestellt ist. Auf der unteren Deckschicht 11 sind mehrere Querträger 13 angeordnet. Die obere Deckschicht erstreckt sich oberhalb der Querträger 13 und ist mit diesen verbunden, beispielsweise durch eine Klebeverbindung. Konkret können die Querträger 13 zwischen der unteren Deckschicht 11 und der oberen Deckschicht angeordnet sein.

Zwischen den voneinander beabstandet angeordneten Querträgern 13 sind Kammern 12 gebildet, die bei dem Boden 10 mit einem Schaummaterial ausgefüllt sind. Das Schaummaterial ist ebenfalls aus Gründen der Übersichtlichkeit in den beigefügten Zeichnungen nicht dargestellt. Generell ist jedoch vorgesehen, dass jede Kammer 12, die jeweils durch zwei Querträger 13, die untere Deckschicht 11 und die obere Deckschicht begrenzt ist, vollständig mit dem Schaummaterial ausgefüllt ist. Auf diese Weise wird ein thermisch isolierender Boden 10 für einen Fahrzeugaufbau bereitgestellt. Ein solcher Fahrzeugaufbau wird vorzugsweise für Kühlfahrzeuge eingesetzt. Dabei können die Kühlfahrzeuge als Allzweck-Kühlfahrzeuge oder Tiefkühlfahrzeuge ausgebildet sein.

Der Querträger 13 umfasst generell einen Untergurt 13a, einen Obergurt 13b und einen Steg 13c, der den Untergurt 13a und den Obergurt 13b miteinander verbindet. Vorzugsweise sind Untergurt 13a, Obergurt 13b und Steg 13c insgesamt einstückig ausgebildet. Der Querträger 13 kann insbesondere als einteiliges Profilstück ausgebildet sein.

Um den Querträger 13 zwischen der unteren Deckschicht 11 und der oberen Deckschicht zu fixieren bzw. zu positionieren, kann vorgesehen sein, den Querträger 13 mit der unteren Deckschicht 11 und/oder der oberen Deckschicht zu verkleben. Dazu sind am Untergurt 13a und am Obergurt 13b jeweils Klebenuten 15 vorgesehen, die sich vorzugsweise über die gesamte Länge des Querträgers 13 erstrecken und einen Klebstoff aufnehmen können.

Eine reine Verklebung der Querträger 13 mit der unteren Deckschicht 11 und der oberen Deckschicht ist nicht ausreichend, um die Struktur Fahrzeugs stabil zu halten. Daher ist bei der Erfindung vorgesehen, ein zusätzliches Spannelement 20 einzusetzen, das den Querträger 13 mit einem Chassis 30 des Fahrzeugs fest verbindet. Das Spannelement 20 liegt dazu auf einer Oberseite des Untergurts 13a auf, so dass der Untergurt 13a gegen das Chassis 30 gespannt wird.

Eine erste Variante eines solchen Spannelements 20 zeigt Fig. 1. Das darin gezeigte Spannelement 20 umfasst ein Verbindungselement 25, das sich zwischen zwei Querträgern 13 erstreckt. Das Verbindungselement 25 umfasst vorzugsweise eine Höhe, die im Wesentlichen der Höhe des Untergurts 13a entspricht oder kleiner ist. Das Verbindungselement 25 liegt flächig auf der unteren Deckschicht 11 auf. Vorzugsweise erstreckt sich das Verbindungselement 25 über die gesamte Distanz zwischen den Untergurten 13a der benachbarten Querträger 13.

An den Längsenden des Verbindungselements 25 sind auf dem Verbindungselement 25 Auflageelemente 24 angeordnet. Die Auflageelemente 24 können separate Bauteile sein, die mit dem Verbindungselement 25 verbunden sind, beispielsweise verklebt oder verschweißt. Alternativ ist es auch möglich, dass die Auflageelemente 24 und das Verbindungselement 25 einstückig ausgebildet sind.

Die Auflageelemente 24 ragen über die Längsenden des Verbindungselements 25 vor und übergreifen den Untergurt 13a des Querträgers 13. Im Wesentlichen liegen also die Auflageelemente 24 auf der jeweiligen Oberseite des entsprechenden Untergurts 13a auf.

Das Verbindungselement 25 weist zentral ferner eine Bohrung 21 auf. Die Bohrung 21 kann ein Innengewinde umfassen. Über die Bohrung 21 kann eine Verschraubung erfolgen, wobei eine Schraube durch die untere Deckschicht 11 in die Bohrung 21 eingeschraubt wird. Die Schraube kann dabei direkt in das Chassis 30, insbesondere einen Chassisträger 31, oder ein Gegenstück 28 eingreifen, dass sich gegen das Chassis 30, insbesondere einen Chassisträger 31, spannt. Auf diese Weise kann das Verbindungselement 25 bzw. allgemein das Spannelement 20 fest gegen das Chassis 30 verschraubt oder verspannt werden. Die Auflageelemente 24 spannen so den Querträger 13 gegen das Chassis 30 fest.

Die Variante gemäß Fig. 1 hat den Vorteil, dass ein Spannelement 20 zwei Querträger 13 gegen das Chassis 30 spannen kann. Dies spart die Anzahl an Spannelementen 20 und insbesondere die Anzahl an zusätzlichen Schrauben, wodurch die Montagezeit für den Boden 10 reduziert wird.

In Fig. 2 ist eine alternative Ausgestaltung eines Spannelements 20 gezeigt. Das darin gezeigte Spannelement ist im Wesentlichen als Spannpratze ausgebildet. Konkret weist das Spannelement ein Auflageelement 24 auf, das sich über den Untergurt 13a erstreckt. Das Auflageelement 24 geht in einen Schraubabschnitt 26 über, der eine Bohrung 21 aufweist. Der Schraubabschnitt 26 weist eine Höhe auf, die so angepasst ist, dass der Schraubabschnitt 26 einerseits bündig auf der unteren Deckschicht 11 aufliegt und gleichzeitig das Auflageelement 24 fest auf der Oberseite des Untergurts 13a zu liegen kommt. Die Bohrung 21 kann ein Innengewinde aufweisen, so dass eine Schraube, die durch die untere Deckschicht 11 führt, fest mit dem Schraubabschnitt 26 verbindbar ist. Auf diese Weise dient das Spannelement 20 dazu, den Querträger 13 auf dem Chassis 30 zu befestigen.

Die Fig. 3 und 4 zeigen ein Spannelement 20, das den Untergurt 13a des Querträgers 13 vollständig umgreift. Wie insbesondere in Fig. 4 erkennbar ist, weist das Spannelement 20 Auflageelemente 24 auf, die auf dem Untergurt 13a angeordnet sind. Die Auflageelemente 24 gehen in Schraubabschnitte 26 über, die unterhalb des Untergurts 13a durch eine Grundplatte 27 miteinander verbunden sind. Im Spannelement 20 entsteht so eine T-förmige Schienenöffnung, in welche der Untergurt 13 eingreift. Das Spannelement 20 umgreift so den Untergurt 13a vollständig.

In den beiden Schraubabschnitten 26 des Spannelements 20 ist gemäß Fig. 4 jeweils eine Bohrung 21 angeordnet, die dazu dienen, das Spannelement 20 mit dem Chassis 30 oder einem Gegenstück 28 zu verschrauben, wobei das Gegenstück 28 vorzugsweise eine Spannkraft auf das Chassis 30, insbesondere einen Chassisträger 31, aufbringt. Vorzugsweise weisen die Bohrungen 21 jeweils Innengewinde zur Aufnahme von Schrauben auf. Alternativ können gewindefurchende Schrauben eingesetzt werden. Es ist auch möglich, dass die Schrauben durch Muttern gesichert werden. Die Muttern sind vorzugsweise fluchtend mit den Bohrungen 21 zwischen dem Untergurt 13a und dem Obergurt 13b angeordnet und können insbesondere mit dem jeweiligen Schraubabschnitt 26 fest verbunden, insbesondere verschweißt, sein.

In Fig. 3 ist erkennbar, wie das Spannelement 20 gemäß Fig. 4 in die untere Deckschicht 11 integriert wird. Um zu erreichen, dass der Querträger flächenbündig bzw. vollflächig auf der unteren Deckschicht 11 aufliegt, ist vorgesehen, dass die untere Deckschicht 11 eine Ausnehmung 16 umfasst, die in ihrer Breite und Länge im Wesentlichen der Breite und Länge des Spannelements 20 entspricht. Die Tiefe der Ausnehmung 16 ist vorzugsweise so angepasst, dass das Spannelement 20 so tief darin versinkt, dass der Querträger 13 mit seinem Untergurt 13a flächig auf der unteren Deckschicht 11 aufliegt. Insbesondere kann die Ausnehmung 16 auch durchgängig sein, so dass das Spannelement 20 auf dem Chassis 30, insbesondere einem Chassisträger 31, zu liegen kommt.

Eine besonders bevorzugte Variante eines Spannelements ist in Fig. 5 bis 7 gezeigt. Fig. 5 zeigt insbesondere ein Spannelement, das gemäß Fig. 7 ausgestaltet ist, im Einsatz an einem Querträger 13. Der Querträger 13 weist bei diesem Ausführungsbeispiel eine Profilöffnung 14 auf, die sich durch den Steg 13c erstreckt. Die Profilöffnung 14 ist im Wesentlichen durch eine längliche Öffnung 14a und einen Vertikalschlitz 14b gebildet. Die längliche Öffnung 14a verläuft durch den Steg 13c entlang des Untergurts 13a. Mittig ist von der länglichen Öffnung 14a vertikal nach oben der vertikale Schlitz 14b ausgebildet. Der vertikale Schlitz 14b erstreckt sich vorzugsweise bis höchstens zur Mitte des Stegs 13c.

In der Profilöffnung 14 ist das Spannelement 20 angeordnet. Das Spannelement 20 ist im Wesentlichen als Platte ausgebildet, die eine zentrale Bohrung 21 aufweist. Das Spannelement 20 kommt in der Profilöffnung 14 so zu liegen, dass die Bohrung 21 mit dem vertikalen Schlitz 14b fluchtet. Ebenfalls mit der Bohrung 21 fluchtet vorzugsweise eine Durchgangsöffnung im Untergurt 13a des Querträgers 13. Anstelle einer zentralen bzw. mittigen Bohrung 21 kann auch eine außermittige Bohrung 21 vorgesehen sein. Es ist auch möglich, dass das Spannelement 20 mehrere solche Bohrungen 21 aufweist.

Die Form des Spannelements 20 ist in Fig. 7 gut erkennbar. Konkret ist das Spannelement 20 als Platte mit zentraler Bohrung 21 ausgebildet. Diametral gegenüberliegend sind jedoch zwei Fortsätze 22 vorgesehen. Die Fortsätze 22 fluchten jeweils mit einer Außenkante des Spannelements 20 und erstrecken sich im eingebauten Zustand des Spannelements 20 über die Profilöffnung 14, insbesondere die längliche Öffnung 14a hinaus. Auf diese Weise bilden die Fortsätze 22 jeweils einen Anschlag 23, der gegen den Steg 13c des Querträgers 13 gerichtet ist. Die Fortsätze 22 liegen somit am Steg 13c an und verhindern auf diese Weise eine Verdrehung des Spannelements 20.

Außerdem dienen die Fortsätze 22 dazu, eine Schwächung des Querträgers 13 durch die längliche Öffnung 14a zu kompensieren, indem der Spanndruck auf eine größere Fläche des Untergurts 13a verteilt wird. Dieser Vorteil kommt insbesondere zum Tragen, wenn das Spannelement 20 mit dem Untergurt 13a verklebt ist.

Zur Befestigung des Querträgers 13 auf der unteren Deckschicht 11 kann eine Schraube in die Bohrung 21 eingeschraubt werden, wobei die Schraube zunächst durch die untere Deckschicht 11 und den Untergurt 13a des Querträgers 13 geführt ist. Die Schraube kann entweder in der Bohrung 21 durch ein entsprechendes Innengewinde direkt fixiert werden. Es ist auch möglich, dass sich die Schraube durch die Bohrung 21 in den vertikalen Schlitz 14b erstreckt und dort mittels einer Mutter fixiert wird. In beiden Fällen erfolgt jedenfalls ein Spannen des Spannelements 20 gegen den Untergurt 13a, so dass der Querträger 13 fest auf der unteren Deckschicht 11 fixiert wird.

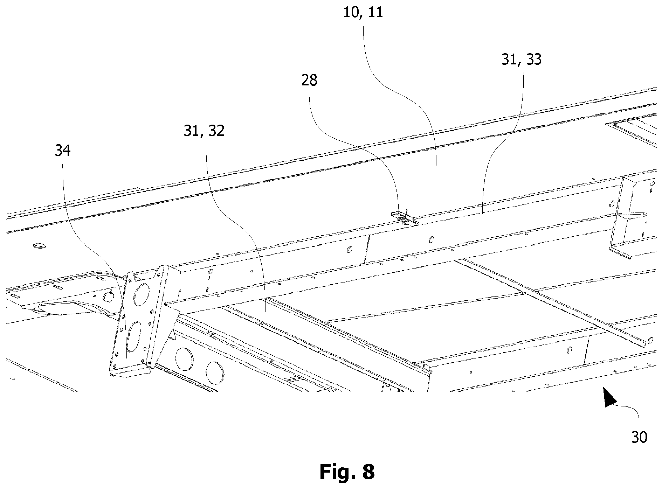

Fig. 8 zeigt einen Ausschnitt eines Fahrzeugs in einer Perspektive von unten. Insbesondere ist in Fig. 8 ein Chassis 30 mit Chassisträgern 31 erkennbar, wobei die Chassisträger 31 Chassis-Querträger 32 und Chassis-Längsträger 33 aufweisen. An den Chassis-Längsträgern 33 sind Achsaufnahmen 34 für ein Fahrwerk angeordnet. Auf den Chassis-Längsträgern 33 liegt der Boden 10, insbesondere dessen untere Deckschicht 11, auf. Am Chassis-Längsträger 33 ist ferner ein Gegenstück 28 angeordnet, dass zusammen mit einem oberhalb der unteren Deckschicht 11 angeordneten Spannelement 20 zusammenwirkt, um den Boden 10 auf dem Chassis 30 zu fixieren.

Das Gegenstück 28 kann im Wesentlichen analog zum Spannelement 20 ausgebildet sein. Insbesondere kann das Gegenstück 28 eine Auflagefläche aufweisen, die an einem Obergurt des Chassis-Längsträgers 33 anliegt. Ferner kann ein Schraubabschnitt vorgesehen sein, der eine Gewindebohrung aufweist, in die eine Schraube eingreift. Die Schraube verbindet das Gegenstück 28 vorzugsweise mit dem Spannelement 20, so dass das Spannelement 20 und das Gegenstück 28 mit der Schraube im Wesentlichen eine Art Schraubstock bilden, der den Chassis-Längsträger 33 mit dem Querträger 13 verspannt.

Das Gegenstück 28 kann auch mit Spannelementen 20 zusammenwirken, die keine analoge Form aufweisen. Insbesondere kann das Gegenstück 28 auch mit einem Spannelement 20 gemäß Fig. 7 kombiniert werden.

### Bezuaszeichenliste

- 10: Boden
- 11: untere Deckschicht
- 12: Kammer
- 13: Querträger
- 13a: Untergurt
- 13b: Obergurt
- 13c: Steg
- 14: Profilöffnung
- 14a: längliche Öffnung
- 14b: vertikaler Schlitz
- 15: Klebenut
- 16: Ausnehmung
- 20: Spannelement
- 21: Bohrung
- 22: Fortsatz
- 23: Anschlag
- 24: Auflageelement
- 25: Verbindungselement
- 26: Schraubabschnitt
- 27: Grundplatte
- 28: Gegenstück
- 30: Chassis
- 31: Chassisträger
- 32: Chassis-Querträger
- 33: Chassis-Längsträger
- 34: Achsaufnahme

## Patentansprüche

1. Fahrzeug, insbesondere ein Kühlfahrzeug, mit einem Chassis (30) und einem Fahrzeugaufbau, der einen Boden (10) mit wenigstens einem zwischen einer unteren Deckschicht (11) und einer oberen Deckschicht angeordneten Querträger (13) aufweist,
**dadurch gekennzeichnet, dass**
der Querträger (13) durch ein I-Profil aus einem Kunststoffmaterial gebildet ist, das einen Untergurt (13a), einen Obergurt (13b) und einen den Untergurt (13a) und den Obergurt (13b) verbindenden Steg (13c) umfasst, wobei der Querträger (13) mittels eines auf einer Oberseite des Untergurts (13a) aufliegenden Spannelements (20) mit dem Chassis (30) verbunden ist.

2. Fahrzeug nach Anspruch 1,
**dadurch gekennzeichnet, dass**
das Spannelement (20) mit dem Querträger (13) ausschließlich formschlüssig verbunden ist.

3. Fahrzeug nach Anspruch 1 oder 2,
**dadurch gekennzeichnet, dass**
das Spannelement (20) mit dem Chassis (30) und/oder einem Gegenstück (31)durch eine Schraube verbunden ist, wobei das Gegenstück (28) an einer zur Oberseite des Untergurt (13a) im Wesentlichen parallelen Unterseite eines Chassisträgers (31) anliegt.

4. Fahrzeug nach einem der vorhergehenden Ansprüche,
**dadurch gekennzeichnet, dass**
das Spannelement (20) eine zumindest zur unteren Deckschicht (11) offene Bohrung (21) aufweist.

5. Fahrzeug nach Anspruch 4,
**dadurch gekennzeichnet, dass**
die Bohrung (21) ein Innengewinde aufweist.

6. Fahrzeug nach einem der Ansprüche 3 bis 5,
**dadurch gekennzeichnet, dass**
die Schraube in die Bohrung (21), insbesondere das Innengewinde,
eingreift.

7. Fahrzeug nach einem der Ansprüche 3 bis 6,
**dadurch gekennzeichnet, dass**
die Schraube als selbstbohrende und/oder gewindefurchende Schraube ausgebildet ist.

8. Fahrzeug nach einem der vorhergehenden Ansprüche,
**dadurch gekennzeichnet, dass**
sich das Spannelement (20) durch eine Profilöffnung (14) im Steg (13c) des Querträgers (13) erstreckt.

9. Fahrzeug nach einem der vorhergehenden Ansprüche,
**dadurch gekennzeichnet, dass**
das Spannelement (20) und/oder das Gegenstück (28) eine Spannpratze bildet/bilden.

10. Fahrzeug nach einem der vorhergehenden Ansprüche,
**dadurch gekennzeichnet, dass**
das Spannelement (20) eine asymmetrische Form aufweist.

11. Fahrzeug nach einem der vorhergehenden Ansprüche,
**dadurch gekennzeichnet, dass**
das Spannelement (20) zwei diametral gegenüber angeordnete Fortsätze (22) umfasst, die auf unterschiedlichen Seiten des Stegs (13c) des Querträgers (13) angeordnet sind und gegenüber dem Steg (13c) jeweils einen Anschlag (23) bilden.

12. Fahrzeug nach Anspruch 11,
**dadurch gekennzeichnet, dass**
die Fortsätze (22) in Längsrichtung des Querträgers (13) über die Profilöffnung (14) vorstehen.

13. Fahrzeug nach einem der vorhergehenden Ansprüche,
**dadurch gekennzeichnet, dass**
das Spannelement (20) zwischen zwei Querträgern (13) angeordnet ist und beide Querträger (13) gemeinsam mit dem Chassis (30) verbindet.

14. Fahrzeug nach einem der vorhergehenden Ansprüche,
**dadurch gekennzeichnet, dass**
das Spannelement (20) den Untergurt (13a) des Querträgers (13) formschlüssig umgreift.

15. Fahrzeug nach einem der vorhergehenden Ansprüche,
**dadurch gekennzeichnet, dass**
das Spannelement (20) unterhalb des Querträgers (13) so in eine Ausnehmung (16) der unteren Deckschicht (11) aufgenommen ist, dass der Querträger (13) auf einer Oberfläche der unteren Deckschicht (11) bündig aufliegt.
